# NEUE EUROPÄISCHE PATENTSCHRIFT

(11) **EP 0 600 214 B2**
(45) Veröffentlichungstag und Bekanntmachung des Hinweises auf die Entscheidung über den Einspruch: **19.04.2006**
(45) Hinweis auf die Patenterteilung: 04.03.1998
(21) Anmeldenummer: 93117224.1
(22) Anmeldetag: 25.10.1993
(51) Int. Cl.: B29C 49/04, B29C 47/00, B29D 23/18

(54) **Verfahren und Vorrichtung zur fortlaufenden Herstellung eines Verbundrohres mit einem aussen im wesentlichen glatten Abschnitt**
Method and apparatus for the continuous manufacturing of a composite pipe having a substantially smooth external wall portion
Procédé et dispositif pour la fabrication continue d'un tube composite comprenant une partie extérieuere essentiellement lisse

(30) Priorität: 01.12.1992 DE 4240268
(43) Veröffentlichungstag der Anmeldung: 08.06.1994
(73) Patentinhaber: Hegler, Ralph-Peter, Dr.-Ing., 97688 Bad Kissingen (DE)
(72) Erfinder: Hegler, Ralph-Peter, Dr., D-97688 Bad Kissingen (DE); Hegler, Wilhelm, D-97688 Bad Kissingen (DE)
(74) Vertreter: Rau, Manfred

(56) Entgegenhaltungen:
- EP-A- 0 237 900
- EP-A- 0 271 598
- EP-A- 0 291 136
- EP-B- 0 563 575
- WO-A-88/05377
- PATENT ABSTRACTS OF JAPAN vol. 10, no. 349 (M-538)(2405) 26. November 1986 & JP-A-61 148 035 (TAKIRON CO. LTD.) 5. Juli 1986
- PATENT ABSTRACTS OF JAPAN vol. 9, no. 162 (M-394)(1885) 6. Juli 1985 & JP-A-60 036 143 (TAKIRON K. K.) 25. Februar 1985

## Beschreibung

Die Erfindung betrifft ein Verfahren nach dem Oberbegriff des Anspruches 1 und eine Vorrichtung nach den Oberbegriff des Anspruches 4.

Aus der EP-A 0 385 465 ist ein derartiges Verfahren bekannt, bei dem zur Herstellung des außen glattwandigen Abschnitts die Extrudiergeschwindigkeit verringert wird, wodurch die Wanddicke vergrößert werden soll. Dieser Abschnitt kann ein Spitzende oder nach entsprechendem Aufweiten eine Rohrmuffe bilden.

Da die aus der EP-A 0 385 465 bekannte Herstellungstechnik erhebliche Probleme aufwirft, ist es aus dem DE 91 11 628 U1 bekanntgeworden, Spitzende und Rohrmuffen gesondert durch Spritzgießen herzustellen und an das Verbundrohr anzuspritzen bzw. anzuschweißen.

Aus der EP-A 0 237 900 ist es bekannt, in einer Formmaschine zur Herstellung eines Rippenrohres Druckausgleichsnuten beiderseits der jeweiligen Hauptausnehmung zur Erzeugung einer Rippe anzuordnen. Diese Druckausgleichsnuten dienen dazu, Druckspitzen auszugleichen, die dadurch entstehen, daß die Hauptausnehmungen zur Erzeugung von Rippen in erheblichem Umfang flüssigen Kunststoff aufnehmen, was dazu führt, daß bei einer über der Zeit gleichmäßigen Extrusion von Kunststoff es in erheblichem Umfang zu Druckschwankungen kommt. Die hierbei auftretenden Druckspitzen sollen durch die Druckausgleichsnuten ausgeglichen werden.

Aus der WO-A 88/05377 ist es bekannt, ein Verbundrohr der gattungsgemäßen Art herzustellen, wobei jeweils im Abstand voneinander im Prinzip glattwandige Muffen ausgebildet werden. Alle Wellenberge des Verbundrohres und auch die Außenwand der Muffe werden entlüftet.

Aus der EP-A 0 271 598 ist es bekannt, eine durch Spritzgießen hergestellte Rohrmuffe in einem plastischen Verformungsvorgang mit dem Verbundrohr zu verbinden.

Der Erfindung liegt die Aufgabe zugrunde, ein Verfahren der gattungsgemäßen Art so auszugestalten, daß ein vollflächiges Verschweißen von Innen-Schlauch und Außen- Schlauch unter entsprechender Druckausübung erfolgt, ohne daß eine Schädigung des Rohres eintritt, und eine Vorrichtung zur Durchführung dieses Verfahrens anzugeben.

Die der Erfindung zugrundeliegende Aufgabe wird bei einem Verfahren durch die Merkmale des Anspruches 1 gelöst. Dadurch daß der auch außen glattwandige Abschnitt stellenweise druckentlastet wird, kann überschüssige Schmelze an diesen Stellen entweichen, so daß übermäßige Drücke beim Verschweißen von Innen-Schlauch und Außen-Schlauch vermieden werden, die zu Beschädigungen dieses Abschnittes führen können. Die auf diese Weise hergestellten Abschnitte werden anschließend zu Rohrmuffen aufgeweitet oder gegebenenfalls auch als Spitzende verwendet. Damit einerseits eine Druckentlastung erfolgt, andererseits aber die zum Verschweißen notwendigen Drücke erhalten bleiben, sind die Druckentlastungsstellen relativ Klein.

Die Aufgabe wird weiterhin durch die Merkmale im Anspruch 4 gelöst. Dadurch daß überschüssige Schmelze in die Kompensationskammern entweichen kann, wird vermieden, daß durch die Kalibrier- und Temperierglocke die Formbacken sowie das Rohr beschädigt werden.

Weitere vorteilhafte Merkmale ergeben sich aus den Unteransprüchen.

Weitere Merkmale, Einzelheiten und Vorteile der Erfindung ergeben sich aus der nachfolgenden Beschreibung von Ausführungsbeispielen anhand der Zeichnung. Es zeigt
- Fig. 1: eine Draufsicht auf eine Vorrichtung zur Herstellung von Kunststoff-Verbundrohren,
- Fig. 2: einen vertikalen Teilschnitt durch die Vorrichtung mit einer Ausnehmung zur Herstellung eines Spitzendes an einem Verbundrohr,
- Fig. 3: ein Verbundrohr, in dem fortlaufend ein Spitzende hergestellt wird,
- Fig. 4: eine Rohrverbindung zwischen einem Rohr mit Muffe und einem gewellten Verbundrohr und
- Fig. 5: eine Rohrverbindung zwischen einem Verbundrohr mit Rohrmuffe und einem glattwandigen Vollwandrohr.

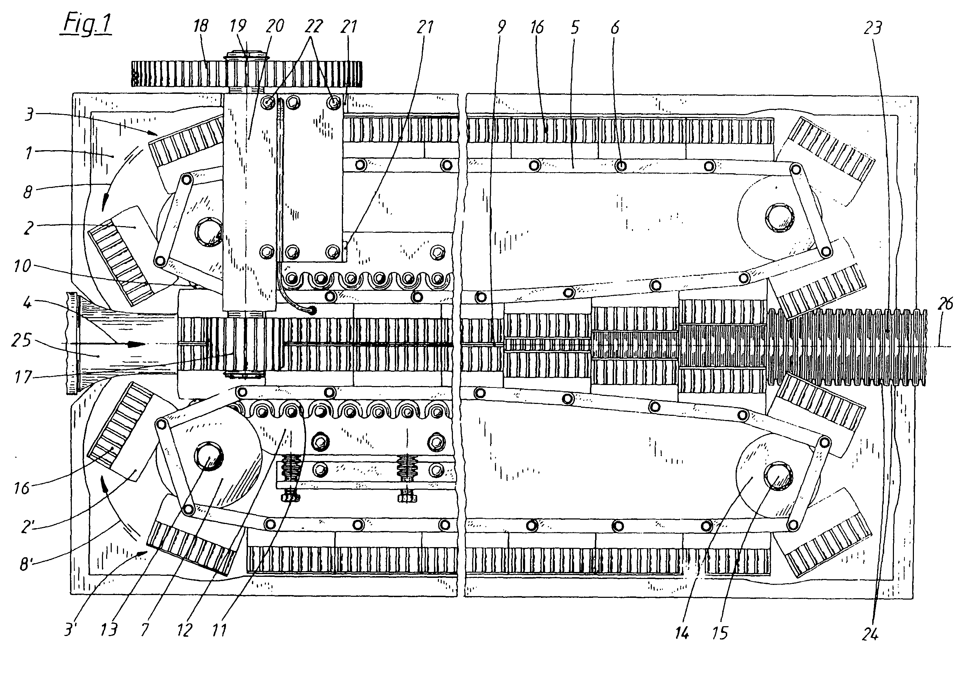

Wie Fig. 1 erkennen läßt, weist eine Vorrichtung zur Herstellung von Kunststoff-Verbundrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außerliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2,2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23, und zwar sogenannte Verbundrohre, mit unter anderem einer Querprofilierung, d.h. mit über deren Umfang umlaufenden Rillen 24 hergestellt.

Die Rohre 23 werden weiter unten noch genauer beschrieben. Hierzu ist ein Extruder vorgesehen, von dem nur der weiter unten noch genauer zu beschreibende Spritzkopf 25 angedeutet ist. Die bisher beschriebene Vorrichtung ist bekannt, und zwar beispielsweise aus der EP-A 0 065 729 (entsprechend US 4 492 551) und aus der DE 40 21 564 A1.

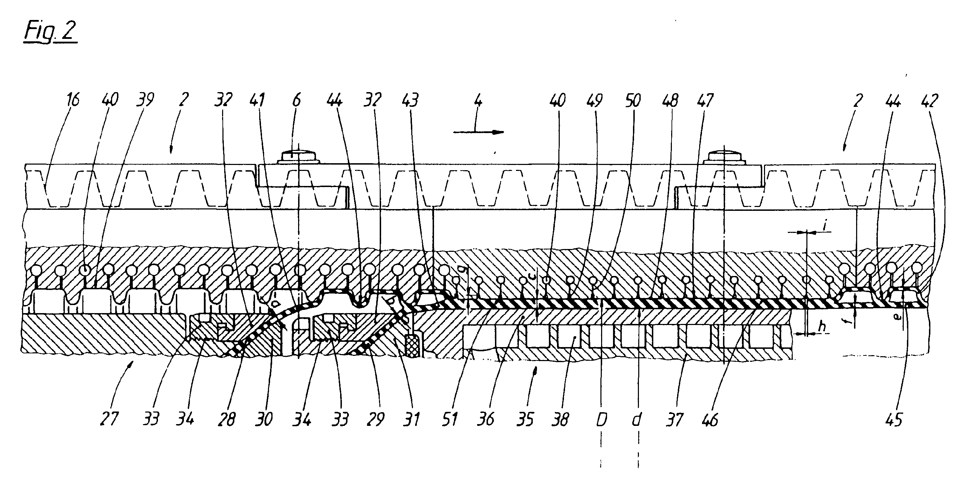

Wie primär Fig. 2 zu entnehmen ist, ist konzentrisch zu einer gemeinsamen Mittel-Längs-Achse 26 des Spritzkopfes 25 und der Formstrecke 9 ist am Spritzkopf 25 ein in die Formstrecke 9 hineinragender Düsenkörper 27 angebracht, in dem ein Außen-Kanal 28 und ein Innen-Kanal 29 ausgebildet sind. Der Außen-Kanal 28 endet in einer Außen-Düse 30, der Innen-Kanal 29 endet in einer Innen-Düse 31. Die Weite a der Außen-Düse 30 und die Weite b der Innen-Düse 31 ist jeweils dadurch einstellbar, daß ein die jeweilige Düse 30 bzw. 31 auf der Außenseite begrenzender Düsenring 32 mittels einer Düsenringmutter 33 in Richtung der Achse 26 bzw. der Produktionsrichtung 4 verstellbar ist. Die Düsenringmutter 33 ist jeweils auf einem entsprechenden Gewinde 34 am Düsenkörper 27 verstellbar.

An den Düsenkörper 27 schließt sich in Produktionsrichtung 4 eine Kalibrier-und Temperierglocke 35 an. Diese ist mit einem ebenfalls konzentrisch zur Achse 26 angeordneten in üblicher Weise ausgestalteten, im wesentlichen zylindrischen Kalibrierzylinder 36 versehen, der auf einem Temperierzylinder 37 angeordnet ist. An der Außenseite des Temperierzylinders 37, d.h. an der Innenseite des Kalibrierzylinders 36 ist ein Temperier-Kanal 38 ausgebildet, durch den ein Temperiermedium, also ein Kühlmedium oder ein Heizmedium, geleitet werden kann.

Wie Fig. 2 erkennen läßt, sind in den Halbkokillen, von denen in Fig. 2 nur die Halbkobllen 2 dargestellt sind, ringförmige Formausnehmung 39 ausgebildet, die in bekannter Weise an Teil-Vakuum-Kanäle 40 angeschlossen sind.

Die vom Extruder durch den Spritzkopf 25 zugeführte Kunststoffschmelze strömt zum Teil durch den Außen-Kanal 28 zur Außen-Düse 30, aus der ein Außen-Schlauch 41 extrudiert wird, der sich unter Formung eines mit den Querrillen 24 versehenen Schlauches aufgrund des Teilvakuums in die Formausnehmungen 39 legt. Er bildet nach entsprechender Abkühlung und Erstarrung das gewellte Außenrohr 42 des Rohres 23.

Ein anderer Teil der Schmelze strömt durch den Innen-Kanal 29 zur Innen-Düse 31, aus der ein weiterer Schlauch, nämlich der Innen-Schlauch 43 austritt, der auf den Kalibrierzylinder 36 gelangt. Dieser erweitert sich von der Innen-Düse 31 in Produktionsrichtung 4 leicht nach außen bis der Innen-Schlauch 43 gegen die Wellentäler 44 des Außen-Schlauches 41 gelangt und hier mit diesen verschweißt wird. Der Innen-Schlauch 43 bildet nach Abkühlung unter Erstarrung das Innenrohr 45 des Verbundrohres 23.

Wie aus Fig. 2 ersichtlich ist, sind die Halbkokillen 2, 2' so ausgebildet, daß jeweils in vorgegebenen Abständen innerhalb des endlos hergestellten Verbundrohres 23 sogenannte Spitzenden 46 ausgebildet werden. Hierzu ist in einem Paar von Halbkobllen 2, 2' eine im wesentlichen zylindrischen Spitzende-Ausnehmung 47 ausgebildet, die also eine im wesentlichen zylindrische Wand 48 aufweist. Ein Spitzende 46 muß sich naturgemäß nicht über die volle Länge eines Paares von Halbkokillen 2, 2' in Produktionsrichtung 4 erstrekken; sie kann sich auch nur über einen Teil dieser Länge erstrecken. Der Durchmesser D der zylindrischen Wand 48 ist also im Vergleich zum Durchmesser d des Kalibrierzylinders 36 um die doppelte Wanddicke c des zu erzeugenden Spitzendes 46 größer. Das Verschweißen von Außen-Schlauch 41 und Innen-Schlauch 43 erfolgt hierbei nur durch das Zusammenpressen der beiden Schläuche 41, 43 zwischen dem Kalibrierzylinder 36 und der Wand 48 der Spitzende-Ausnehmung 47. Die Geschwindigkeit der Form kann hierbei durch entsprechende Ansteuerung des Antriebsmotors für das Antriebsritzel 17 zurückgenommen worden sein, so daß mehr Schmelze pro Längeneinheit des zu erzeugenden Rohres 23 in das Spitzende 46 gelangt als zur Erzeugung des mit Rillen 24 versehenen Verbundrohres 23, so daß die Wanddicke c des Spitzendes 46 größer ist als die Summe der Wanddicken e und f von Außenrohr 42 und Innenrohr 45. Um Pressungen der Schmelze bei der Herstellung des Spitzendes 46 zwischen Wand 48 und Kalibrierzylinder 36 aufgrund nicht exakter Dosierung durch den Extruder zu vermeiden, sind in der zylindrischen Wand 48 der entsprechenden Halbkokillen 2, 2' in Form schmaler Ringe ausgebildete Kompensationskammern 49 ausgebildet, in die Vakuumschlitze 50 einmünden, die jeweils mit einem Teil-Vakuum-Kanal 40 verbunden. Die Kompensationskammern 49 sind also einerseits mit dem zur Ausformung eines Spitzendes 46 dienenden SpitzendeFormraum 51 offen und andererseits an einen Teil-Vakuum-Kanal 40 angeschlossen. In diese Kompensationskammern 49 kann überschüssige Schmelze, die zur Füllung des Spitzende-Formraums 51 nicht benötigt wird, ausweichen, ohne daß es zu Beschädigungen des Spitzendes 46 kommt. Derartige Beschädigungen können auch dadurch auftreten, daß aufgrund zu hohen Druckes im Spitzende-Formraum die Reibung zwischen Schmelze und Kalibrierzylinder 36 zu groß wird. Da die Kompensationskammern 49 an die Teil-Vakuum-Kanäle 40 angeschlossen sind, kann überschüssige Schmelze tatsächlich auch in diese eintreten. Die radial zur Achse 25 gemessene Tiefe g der Kompensationskammern 49 von der Wand 48 aus und deren Breite h in Produktionsrichtung 4 hängt wesentlich von den rheologischen Eigenschaften der Schmelze ab, und zwar primär von deren Viskosität. Ihre Dimensionierung hängt davon ab, daß einerseits die zum Verschweißen von Innen-Schlauch 45 und Außen-Schlauch 41 notwendigen Drücke erzeugt werden, ohne daß extreme Überdrücke durch eventuellen Überfluß an Schmelze im Spitzende-Formraum 51 aufgefangen werden müssen. Für die Breite h der Kompensationskammern 49 in Produktionsrichtung 4 im Vergleich zur Breite i der Vakuumschlitze 50 ebenfalls in Produktionsrichtung 4 gilt: h ≤ 2i.

Die Kompensationskammern können sich auch parallel zur Achse 26 erstrecken, ansonsten aber gleich dimensioniert und an die Teil-Vakuum-Kanäle angeschlossen sein.

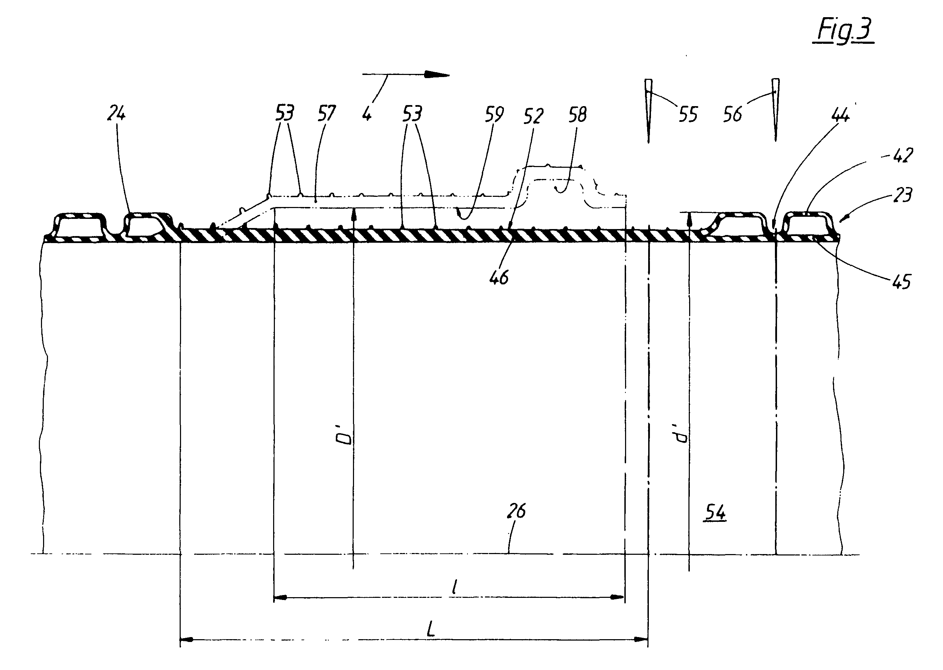

Wie Fig. 3 entnehmbar ist, führen die Kompensationskammern 49 dazu, daß auf der Außenwand 52 eines Spitzendes 46 kleine umlaufende stegartige Vorsprünge 53 gebildet werden, deren Abmessungen maximal denen der Kompensationskammer 49 entsprechen. Es sei in diesem Zusammenhang darauf hingewiesen, daß die Breite der Vakuumschlitze 50 so klein ist, daß Schmelze nicht in diese gelangen kann. Wie Fig. 3 weiterhin entnehmbar ist, werden die Vorsprünge 53 entgegen der Produktionsrichtung 4 größer und breiter. Dies hat seine Ursache darin, daß nicht die gesamte überschüssige Schmelze von Anfang an ausschließlich in die Kompensationskammern 49 gedrückt wird, sondern auch teilweise entgegen der Produktionsrichtung 4 zurückstaut, so daß mit zunehmender Ausbildung eines Spitzendes der relative Schmelzeüberfluß zunimmt mit der Folge, daß mehr Schmelze in die Kompensationskammern 49 gedrückt wird bzw, ausweicht.

In Fig. 3 ist weiterhin ein Übergangsabschnitt 54 gezeigt, der - bezogen auf die Produktionsrichtung 4 - vorn, d.h. am Übergang vom mit Rillen 24 versehenen Verbundrohr 23 zum Spitzende 46 ausgebildet ist. Dieser Übergangsabschnitt 54 wird mittels zweier Sägeschnitte 55, 56 herausgetrennt. Es wird also ein kurzer durch den Übergangsabschnitt 54 gebildeter Rohrabschnitt herausgeschritten.

In Fig. 3 ist strichpunktiert eine Muffe 57 dargestellt, die durch Aufmuffen des Spitzendes 46 - nach Abtrennen des Übergangsabschnittes 54 geformt ist. Auch sie trägt die Vorsprünge 53 auf ihrer Außenseite. Die Muffe 57 ist mit einer stark ausgeprägten Innennut 58 zur Aufnahme eines Dichtungsringes versehen. Der Innendurchmesser D' der zylindrischen Innenwand 59 der Muffe 57 ist etwa gleich oder unwesentlich größer als der Außendurchmesser d' des Rohres 23 mit den Rillen 24. Wie aus Fig. 3 hervorgeht, ist die axiale Länge I der Muffe 57 durch das Aufmuffen und insbesondere das Ausbilden der Innennut 58 geringer als die axiale Länge L' des Spitzendes 46.

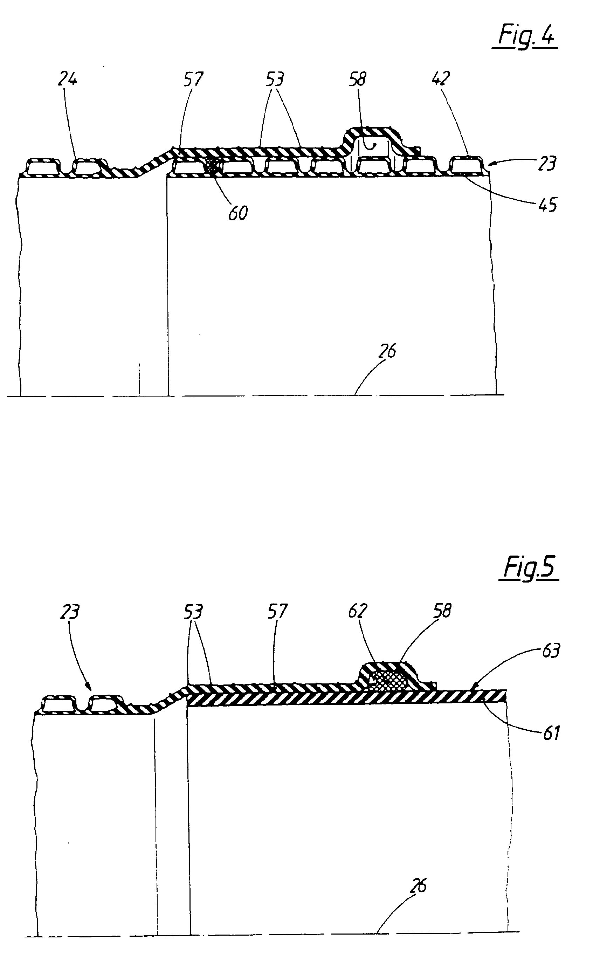

Fig. 4 zeigt eine Verbindung von zwei Rohren 23 miteinander, bei denen die angeformte Muffe 57 in der zu Fig. 3 beschriebenen Art und Weite hergestellt ist, wobei also die Muffe 57 über das mit Rillen 24 versehene, aus gewelltem Außenrohr 42 und glattem Innenrohr 45 bestehende Rohr 23 geschoben ist. In eine Rille 24 ist eine Dichtung 60 eingelegt. Demgegenüber zeigt Fig. 5 ein Verbundrohr 23 mit einer in der geschilderten Weise hergestellten Muffe 57, die auf ein glattwandiges Vollwandrohr 61 oder einen Rohrabschnitt in Form eines Vollwandrohres aufgeschoben ist. Hierbei ist in der Innennut 58 eine Dichtung 62 angeordnet, die dichtend gegen die glatte zylindrische Außenwand 63 des Vollwandrohres 61 anliegt.

## Patentansprüche

1. Verfahren zur fortlaufenden Herstellung eines aus einem glatten Innenrohr (45) mit durchgehend konstantem Innendurchmesser und aus einem mit diesem verschweißten, mit Querrillen (24) mit Wellentälern (44) versehenen Außenrohr (42) bestehenden Verbundrohres (23) aus Kunststoff mit einem außen im wesentlichen glattwandigen Spitzende (46), dessen Außendurchmesser kleiner ist als der Außendurchmesser der Querrillen (24), wobei
- ein Außen-Schlauch (41) extrudiert wird,
- der Außen-Schlauch (41) durch von außen aufgebrachtes Teil-Vakuum mit einer Wellung mitQuerrillen (24) mit Wellentälern (44) versehen wird,
- ein Innen-Schlauch (43) in den Außen-Schlauch (41) extrudiert wird,
- der Innen-Schlauch (43) gegen die Wellentäler (44) des Außen-Schlauches (41) gedrückt und dort mit dem Außen-Schlauch (41) verschweißt wird,
- der Außen-Schlauch (41) in vorgegebenen Abständen zu einem im wesentlichen glattwandigen etwa zylindischen Spitzende (46) geformt wird und
- der Innen-Schlauch (43) von innen vollflächig gegen den Außen-Schlauch (41) gedrückt wird,
**dadurch gekennzeichnet,**
- **daß** der Außen-Schlauch (41) unter Aufbringung eines Teil-Vakuums von außen zu dem Spitzende (46) geformt wird und
- und **daß** die Außen-Wand (52) des Außen-Schlauches (41) im Bereich des Spitzendes (46) in kleinen Flächenbereichen druckentlastet wird und **dadurch** dort kleine Vorsprünge (53) als Kompensation für eine nicht exakte Dosierung bei der Extrusion des Kunststoffes gebildet werden.

2. Verfahren nach Anspruch 1, **dadurch gekennzeichnet, daß** die Außenwand (52) in ringförmigen Zonen druckentlastet wird.

3. Verfahren nach Anspruch 1 oder 2, **dadurch gekennzeichnet, daß** die kleinen Flächenbereiche durch Teil-Vakuum druckentlastet werden.

4. Vorrichtung zur Durchführung des Verfahrens nach einem der Ansprüche 1 bis 3, wobei
- mit ringförmigen Formausnehmungen (39) versehene, sich auf einer Formstrecke (9) jeweils paarweise zu einer Form mit einer Mittel-Längs-Achse (26) ergänzende Halbkokillen (2, 2') auf einem Maschinentisch (1) im Kreislauf und in Produktionsrichtung (4) geführt angeordnet sind,
- die Formausnehmungen (39) an in den Halbkokillen (2, 2') ausgebildete Teil-Vakuum-Kanäle (40) angeschlossen sind,
- der Formstrecke (9) ein Spritzkopf (25) eines Extruders vorgeordnet ist,
- der Spritzkopf (25) mit einer Außen-Düse (30) zur Extrusion eines Außen-Schlauches (41) und in Produktionsrichtung (4) nachgeordnet mit einer Innen-Düse (31) zur Extrusion eines Innen-Schlauches (43) und an seinem in Produktionsrichtung (4) hintenliegenden Ende mit einer mit einem Kalibrierzylinder (36) versehenen Kalibrier- und Temperierglocke (35) versehen ist, und
- mindestens ein Paar Halbkokillen (2, 2') mit einer Spitzende-Ausnehmung (47) mit einer im wesentlichen zylindrischen Wand (48) versehen ist,
**dadurch gekennzeichnet, daß** in der im wesentlichen zylindrischen Wand (48) Kompensationskammern (49) zur Bildung von Vorsprüngen (53), deren Abmessungen maximal denen der Kompensationskammern (49) entsprechen, ausgebildet sind.

5. Vorrichtung nach Anspruch 4, **dadurch gekennzeichnet, daß** die Kompensationskammern (49) in Form zur Mittel-Längs-Achse (26) konzentrisch angeordneter Ringe ausgebildet sind.

6. Vorrichtung nach Anspruch 4 oder 5, **dadurch gekennzeichnet, daß** die Kompensationskammern (49) an Teil-Vakuum-Kanäle (40) angeschlossen sind.

7. Vorrichtung nach Anspruch 6, **dadurch gekennzeichnet, daß** die Kompensationskammern (49) über Vakuumschlitze (50) an Teil-Vakuum-Kanäle (40) angeschlossen sind.

8. Vorrichtung nach Anspruch 7, **dadurch gekennzeichnet, daß** für die Breite (h) der Kompensationskammern (49) im Vergleich zu der Breite (i) der Vakuum-Schlitze (50) jeweils in Produktionsrichtung (4) gilt: h ≤ 2i.

## Claims

1. A method for the continuous manufacture of a compound pipe (23) of plastic material, which comprises a smooth internal pipe (45) of continuously constant internal diameter, and an external pipe (42) provided with transverse grooves (24) with corrugation troughs (44) and welded together with the internal pipe (45), and a spigot 46 substantially smooth outside,
- an external tube (41) being extruded;
- the external tube (41), by partial vacuum applied from outside, being provided with a corrugation with transverse grooves (24) with corrugation troughs (44);
- an internal tube (43) being extruded into the external tube (41);
- the internal tube (43) being pressed against corrugation troughs (44) of the external tube (41), where it is welded together with the external tube (41);
- the external tube (41) being formed at predetermined intervals to constitute an essentially smooth-walled, about cylindrical spigot 46; and
- the internal tube (43) being pressed from inside full-face against the external tube (41);
**characterized**
- **in that** the external tube (41) is formed to constitute the spigot (46) by a partial vacuum being applied from outside, and
- **in that** the external wall (52) of the external tube (41), in the vicinity of the spigot 46, is pressure-relieved in small surface sections where small projections (53) are thus formed as a compensation for inaccurate proportioning during the extrusion of the plastic material.

2. A method according to claim 1, **characterized in that** the external wall (52) is pressure-relieved in annular zones.

3. A method according to claim 1 or 2, **characterized in that** the small surface sections are pressure-relieved by partial vacuum.

4. An apparatus for putting into practice the method according to one of claims 1 to 3,
- half shells (2, 2') being disposed on a machine bed (1) for circulation and guidance in the direction (4) of production, which are provided with annular mold recesses (39) and of which two at a time combine as a pair on a molding path (9) to form a mold with a central longitudinal axis (26),
- the mold recesses (39) being connected to partial vacuum channels (40) formed in the half shells (2, 2'),
- an injection head (25) of an extruder being disposed upstream of the molding path (9),
- the injection head (25) being provided with an external nozzle (30) for the extrusion of an external tube (41) and, downstream in the direction (4) of production, with an internal nozzle (31) for the extrusion of an internal tube (43) and, at its rear end seen in the direction (4) of production, with a calibrating and temperature-regulating bell (35) which is provided with a calibrating cylinder (36), and
- at least one pair of half shells (2, 2') being provided with a spigot recess (47) with a substantially cylindrical wall (48),
**characterized in that** compensation chambers (49) are formed in the substantially cylindrical wall (48) for the formation of projections (53), the dimensions of which correspond maximally to those of the compensation chambers (49).

5. An apparatus according to claim 4, **characterized in that** the compensation chambers (49) are in the form of rings arranged concentrically to the central longitudinal axis (26).

6. An apparatus according to claim 4 or 5, **characterized in that** the compensation chambers (49) are connected to partial vacuum channels (40).

7. An apparatus according to claim 6, **characterized in that** the compensation chambers (49) are connected to partial vacuum channels (40) via vacuum slits (50).

8. An apparatus according to claim 7, **characterized in that** h ≤ 2i applies to the width (h) of the compensation chambers (49) in comparison with the width (i) of the vacuum slits (50) in the direction (4) of production.

## Revendications

1. Procédé pour la fabrication continue d'un tube composite (23) en matière plastique, comprenant un tube intérieur lisse (45) de diamètre intérieur constant de bout en bout, et un tube extérieur (42) soudé audit tube intérieur et muni de rainures transversales (24) présentant des creusures (44), comportant une extrémité pointue (46) à paroi extérieurement lisse pour l'essentiel, et dont le diamètre extérieur est plus petit que le diamètre extérieur des rainures transversales (24), procédé dans lequel
- un flexible extérieur (41) est extrudé,
- le flexible extérieur (41) est muni, sous l'effet d'un vide partiel appliqué de l'extérieur, d'une ondulation à rainures transversales (24) présentant des creusures (44),
- un flexible intérieur (43) est extrudé dans le flexible extérieur (41),
- le flexible intérieur (43) est pressé contre les creusures (44) du flexible extérieur (41), et est soudé audit flexible extérieur (41) à cet emplacement,
- le flexible extérieur (41) est amené, par intervalles préétablis, à la forme d'une extrémité pointue (46) sensiblement cylindrique, à paroi essentiellement lisse, et
- le flexible intérieur (43) est pressé de l'intérieur contre le flexible extérieur (41), par toute sa superficie,
**caractérisé par le fait**
- **que** le flexible extérieur (41) est amené de l'extérieur, par application d'un vide partiel, à la forme de l'extrémité pointue (46) ;
- et **que** la pression exercée sur la paroi extérieure (52) du flexible extérieur (41) est relâchée dans de petites zones superficielles, dans la région de l'extrémité pointue (46), ce qui donne naissance, à cet emplacement, à de petites protubérances (53) assurant la compensation d'un dosage imprécis lors de l'extrusion de la matière plastique.

2. Procédé selon la revendication 1, **caractérisé par le fait que** la pression exercée sur la paroi extérieure (52) est relâchée dans des zones annulaires.

3. Procédé selon la revendication 1 ou 2, **caractérisé par le fait que** la pression exercée sur les petites zones superficielles est relâchée par un vide partiel.

4. Dispositif pour la mise en oeuvre du procédé selon l'une des revendications 1 à 3, dans lequel
- des demi-coquilles (2, 2'), pourvues de cavités annulaires de moulage (39) et se complétant par paires respectives, sur un trajet de moulage (9), pour former un moule à axe médian longitudinal (26), sont agencées en révolution sur un plateau (1) de machine, avec guidage dans une direction de production (4),
- les cavités de moulage (39) sont raccordées à des canaux (40) à vide partiel, ménagés dans les demi-coquilles (2, 2'),
- une tête d'injection (25) d'une extrudeuse est disposée en amont du trajet de moulage (9),
- la tête d'injection (25) est équipée d'une buse extérieure (30) en vue de l'extrusion d'un flexible extérieur (41); d'une buse intérieure (31), en aval dans la direction de production (4), en vue de l'extrusion d'un flexible intérieur (43); et, à son extrémité située à l'arrière dans la direction de production (4), d'une cloche (35) de calibrage et d'équilibrage thermique, dotée d'un cylindre de calibrage (36), et
- au moins une paire de demi-coquilles (2, 2') est munie d'un évidement (47) affecté à une extrémité pointue, présentant une paroi (48) pour l'essentiel cylindrique,
**caractérisé par le fait que** des chambres de compensation (49) sont ménagées dans la paroi (48) essentiellement cylindrique pour la formation de protubérances, dont les dimensions correspondent au maximum à ceux des chambres de compensations (49).

5. Dispositif selon la revendication 4, **caractérisé par le fait que** les chambres de compensation (49) sont réalisées sous la forme d'anneaux agencés concentriquement à l'axe médian longitudinal (26).

6. Dispositif selon la revendication 4 ou 5, **caractérisé par le fait que** les chambres de compensation (49) sont raccordées à des canaux (40) à vide partiel.

7. Dispositif selon la revendication 6, **caractérisé par le fait que** les chambres de compensation (49) sont raccordées, par l'intermédiaire de fentes de dépression (50), à des canaux (40) à vide partiel.

8. Dispositif selon la revendication 7, **caractérisé par le fait que** la largeur (h) des chambres de compensation (49), comparativement à la largeur (i) des fentes de dépression (50), obéit respectivement à la relation h ≤ 2i dans la direction de production (4).
